# EUROPÄISCHE PATENTSCHRIFT

(11) **EP 2 649 019 B1**
(45) Veröffentlichungstag und Bekanntmachung des Hinweises auf die Patenterteilung: **13.04.2016**
(21) Anmeldenummer: 11787811.6
(22) Anmeldetag: 14.11.2011
(51) Int. Cl.: C03C 3/087, C03C 4/20

(54) **BORFREIES UNIVERSALGLAS**
BORON-FREE UNIVERSAL GLASS
VERRE UNIVERSEL SANS BORE

(30) Priorität: 08.12.2010 DE 102010054967
(43) Veröffentlichungstag der Anmeldung: 16.10.2013
(73) Patentinhaber: Schott AG, 55122 Mainz (DE)
(72) Erfinder: BRIX, Peter, 55116 Mainz (DE)
(74) Vertreter: Witte, Weller & Partner Patentanwälte mbB
(86) Internationale Anmeldenummer: PCT/EP2011/070004
(87) Internationale Veröffentlichungsnummer: WO 2012/076289

(56) Entgegenhaltungen:
- EP-A1- 1 170 264
- EP-A2- 0 672 629
- DE-T2- 69 916 683
- US-A1- 2009 239 102
- ZDANIEWSKI W: "DTA and X-Ray Analysis Study of Nucleation and Crystallization of MgO-Al2O3-SiO2 Glasses Containing ZrO2, TiO2, and CeO2", JOURNAL OF THE AMERICAN CERAMIC SOCIETY,, Bd. 58, Nr. 5/6, 1. Mai 1975 (1975-05-01), Seiten 163-169, XP001277624,

## Beschreibung

Die Erfindung betrifft chemisch stabile Universalgläser, welche ohne den Zusatz von borhaltigen Rohstoffen erschmolzen werden können (borfreie Universalgläser).

Unter dem Begriff "Universalglas" werden Gläser mit einer sehr guten chemischen Beständigkeit und niedriger thermischer Dehnung zusammengefasst, die sich für eine weite industrielle Verbreitung und kommerzielle Nutzung eignen.

Zu den bekannten Universalgläsern zählen u.a. Duran® der Fa. Schott AG, Mainz, DE und Pyrex® der Fa. Corning Inc., USA. Es sind seit langem bekannte Borosilikatgläser mit etwa 13 Gewichtsprozent B₂O₃ in der Synthese. Wegen der geringen thermischen Dehnung weisen sie eine hohe Temperaturunterschiedsfestigkeit (TUF) auf und sind daher stabil gegen Temperaturwechsel bei der Anwendung der Gläser.

Weiterhin wirken diese Gläser "neutral", indem sie kaum Glasbestandteile an die enthaltenen Lösungen abgeben. Sie gehören daher auch in die Gruppe der "Neutralgläser" und können als Primärverpackungsmaterialien in der Pharmaindustrie, insbesondere für Injektionslösungen, eingesetzt werden.

Die Messungen und Klasseneinteilungen der chemischen Beständigkeiten von Technischen Gläsern erfolgen entsprechend genormter Messvorschriften gemäß Tabelle 1:

**Tabelle 1: Klassen der chemischen Beständigkeit für Technische Gläser**

| Beständigkeit gegen... | Wasser (H) | Säure (S) | Lauge (L) |
|---|---|---|---|
| Norm | DIN ISO 719 | DIN 12116 | DIN ISO 695 |
| Lösung | Dest. H₂O | 6n HCl (halbkonz.) | 0,5m Na₂CO₃ + 0,5m NaOH |
| Temperatur | 98°C | 108°C | 102°C |
| Dauer | 1 Std | 6 Std | 3 Std |
| Einheit | µgNa₂O/g Glas | mg/dm² | mg/dm² |
| Klasse 1 | bis 31 | bis 0,7 | bis 75 |
| Klasse 2 | bis 62 | bis 1,5 | bis 175 |
| Klasse 3 | bis 264 | bis 15 | über 175 |
| Klasse 4 | bis 620 | über 15 | |
| Klasse 5 | über 620 | | |

Neutralgläser liegen innerhalb der ersten hydrolytischen und ersten Säureklasse und mindestens in der zweiten Laugenklasse; sie werden hier kurz als "1-1-2 Gläser" bezeichnet.

Borfreie Gläser können natürlich nicht die Forderungen der Norm DIN ISO 3585 ("Borosilicate glass 3.3 - Properties") erfüllen, die an ein Laborglas, d.h. chemisch und thermisch stabile Gläser für den Apparatebau, gestellt werden, da es hier explizit um Borosilikatgläser geht und die in der Norm festgelegten Eigenschaftswerte in ihrer Gesamtheit auch nur von Borosilikatgläsern erfüllt werden können. Dennoch sind im Prinzip auch borfreie Gläser für den Einsatz als Laborglas geeignet, da sie neben den sehr guten chemischen Beständigkeiten (1-1-2 Glas) eine sehr niedrige thermische Dehnung aufweisen können.

Obwohl das Boroxid im SCHOTT Duran® 8412 nur zu etwa 13% vorliegt, verursachen die Borrohstoffe den überwiegenden Teil der gesamten Rohstoffkosten. Noch ungünstiger stellt sich die Rohstoffsituation für Borosilikatgläser ohne Natriumoxid dar, z.B. alkalifreie Gläser für LCD-Schirme, weil hier der viel teurere Rohstoff Borsäure eingesetzt werden muss, der technisch erst aus Borax gewonnen werden muss. Die Kosten für die Glaskomponente B₂O₃ aus dem Rohstoff Boroxid liegen etwa siebenmal höher als die Kosten für B₂O₃ aus dem Rohstoff Dinatriumtetraborat-Pentahydrat.

Die EU (Europäische Union) stuft Borsäure, Dibortrioxid, Dinatrium-tetraborat-Anhydrit, Dinatriumtetraborat-Decahydrat und Dinatriumtetraborat-Pentahydrat neuerdings als reproduktionstoxisch ein. Dies hat zur Folge, dass bei der Herstellung unter Verwendung von solchen Rohstoffe bestimmte Randbedingungen einzuhalten bzw. bestimmte Vorsichtsmaßnahmen zu treffen sind.

Wegen der relativ hohen Kosten borhaltiger Rohstoffe, der absehbaren Verknappung geeigneter Qualitäten sowie der aktuellen Diskussion zur Neueinstufungen der Toxizität von Borverbindungen sind borfreie Gläser als Alternative zu den Borosilikatgläsern von Interesse.

Für den Einsatz als Substratglas, z.B. als Solarglas, Touchpanelglas ist die gute chemische Beständigkeit der borfreien Gläser vorteilhaft, da diese Substratgläser in den meisten Herstellverfahren einer Reinigung mit wässrigen Lösungen und Säuren unterworfen werden, wonach die Glasoberfläche keine Änderungen zeigen darf. Für eine gute Witterungsbeständigkeit ist eine gute chemische Beständigkeit ebenfalls von Vorteil.

Neben der sehr guten chemischen Beständigkeit werden an die Universalgläser bzw. Neutralgläser noch weitere Anforderungen gestellt.

So muss das Glas in herkömmlichen Schmelzaggregaten produzierbar sein, d.h. die Viskosität der Schmelze darf nicht zu hoch liegen - keinesfalls sollte die Verarbeitungstemperatur (Temperatur, bei der die Viskosität 10⁴dPas beträgt, auch als VA oder T4 bezeichnet) den Maximalwert von 1320°C überschreiten. T4 sollte für eine energiesparende Produktion möglichst niedrig liegen.

Eine weitere Kenngröße für die Produzierbarkeit ist eine ausreichende Entglasungsstabilität, d.h. die Neigung zur Ausbildung von Kristallen aus der Schmelze während der Produktion sollte möglichst gering ausfallen.

In der Literatur werden viele boroxidfreie Gläser als "chemisch stabil" beschrieben, ohne das Angaben zu Abtragswerten oder ähnlichem gemacht werden, oder die Angaben zur chemischen Stabilität sind nicht einfach übertragbar auf die Normen der Tabelle 1.

Im Stand der Technik sind zwar eine Reihe von borfreien Gläsern bekannt, jedoch sind diese im Wesentlichen nicht als Universalgläser im Sinne der vorliegenden Definition geeignet.

Aus der Schrift JP 10-045422 ist ein Glas der Zusammensetzung 66-72Mol-% SiO₂, 10 bis 14 Mol-% Al₂O₃, 0 bis 1,5 Mol-% B₂O₃, 0 bis 10 Mol-% MgO, 0 bis 10 Mol-% CaO, 0 bis 10 Mol-% SrO und 0 bis < 1 Mol-% BaO bekannt, welches im Bereich von 20 °C bis 300 °C eine thermische Dehung α von≤ 4 ppm/K und eine Verarbeitungstemperatur T4 oberhalb von 1300°C aufweist. Die Verarbeitungstemperatur T4 ist zu hoch für eine wirtschaftliche Produktion. Auch ist die Säurebeständigkeit schlecht.
Aus der EP 0 672 629 A2 ist ein Aluminusilikatglas bekannt, das 49 bis 67 Gew.-% SiO₂, 6 bis 14 Gew.-% Al₂O₃ und nicht unerhebliche Mengen an Strontiumoxid und Bariumoxid enthält, wobei der Summengehalt an BaO + CaO + SrO + MgO 12 bis 30 Gew.-% beträgt.
Aus der US 2009/0239102 A1 ist ein weiteres borfreies Glas bekannt, das als Substrat zur Herstellung von Festplatten verwendet wird und das 55 bis 70 Mol% SiO₂, 2,5 bis 9 Mol-% Al₂O₃, 0 bis 10 Mol-% MgO, 0 bis 7 Mol-% CaO, 0,5 bis 10 Mol-% SrO, 0,5 bis 3,7 Mol-% ZrO₂, 2 bis 8 Mol-% K₂O 0,5 bis 5 Mal-% La₂O₃ sowie optional weitere Bestandteile enthalten kann.
Aus der DE 699 16 683 T2 ist ferner ein Glassubstrat für Bildschirme bekannt, das als zwingende Bestandteile 62 bis 74 Gew.-% SiO₂, 1 bis 12 Gew.-% Al₂O₃, einen Summengehalt von 72 bis 82 Gew.-% an SiO₂ + Al₂O₃, einen Summengehalt von 5 bis 24 Gew.-% an MgO + CaO, einen Summengehalt von 1 bis 15 Gew.-% an Na₂O + K₂O und einen Summengehalt von 18 bis 25 Gew.-% an MgO + CaO + Na₂O + K₂O aufweist.

Die Aufgabe der Erfindung besteht darin, ein boroxidfreies Neutralglas mit niedriger thermischer Dehnung (vorzugsweise α_{20/300} ≤ 4.10⁻⁶/K) zu finden, welches in herkömmlichen Schmelzanlagen produzierbar ist.

Diese Aufgabe wird durch ein Universalglas gelöst, das wenigstens die folgenden Bestandteile enthält (in Gew.-% auf Oxidbasis):

| | |
|---|---|
| SiO₂ | 65 - 75, |
| Al₂O₃ | 11 - 18, |
| MgO | 5 - 10, |
| CaO | 5 - 10, |

wobei, bis auf unvermeidbare Verunreinigungen, kein B₂O₃, SrO, BaO, CeO₂, PbO und höchstens 0.1 Gew.-% Alkalioxide enthalten sind, eine hydrolytische Beständigkeit nach DIN ISO 719 in der 1. hydrolytischen Klasse, eine Säurebeständigkeit nach DIN 12116 mindestens in der 2. Säureklasse und eine Laugenbeständigkeit nach DIN ISO 695 in mindestens der 2. Laugenklasse vorliegt.

Wenn im Zuge dieser Anmeldung die Rede von "unvermeidbaren Verunreinigungen" ist, so heißt dies grundsätzlich, dass so reine Rohstoffe verwendet werden, dass der Gehalt an der jeweiligen Verunreinigung maximal 1 Ges.-%, insbesondere maximal 0,5 Gew.-%, oder sogar maximal 0,1 Gew.-% beträgt, soweit nicht im Einzelfall eine besondere Angabe gemacht ist.

Im Falle von Ceroxid wird auf eine absichtliche Zugabe von Ceroxid verzichtet. Dies hat zur Folge, dass Ceroxid zu maximal 0,1 Gew.-%, vorzugsweise von maximal 0,01 Gew.-% enthalten ist. Ceroxid ist wegen seiner fluoreszierenden Eigenschaften nachteilig bei einer Verwendung des Glases als Universalglas. Außerdem handelt es sich um einen sehr teuren Rohstoff.

Ein Mindestgehalt von 65 Gew.-% SiO₂ ist für diese borfreien Gläser die Grundvoraussetzung für eine Säurebeständigkeit in der ersten Klasse. Wird der Maximalgehalt von 75% überschritten, steigt die Verarbeitungstemperatur auf Werte über 1320°C an, die Schmelze ist somit viel zu zäh um wirtschaftlich in herkömmlichen Schmelzaggregaten produzierbar zu sein.

Vorzugsweise beträgt der Gehalt an SiO₂ mindestens 68 Gew.-%, weiter vorzugsweise maximal 71 Gew.-%.

Al₂O₃ wirkt stabilisierend gegen Entglasung und erhöht die chemische Beständigkeit, indem Alkali- und Erdalkalüonen fester in die Glasstruktur eingebunden werden. Es ist in dem Glas in Mengen von mindestens 11 Gew.-% enthalten. Vorzugsweise beträgt der Gehalt an AlO₃ mehr als 12 Gew.-%, weiter bevorzugt mindestens 12,5 Gew.-%.

Der Maximalgehalt an Al₂O₃ beträgt 18 Gew.-%, vorzugsweise 17 Gew.-%, insbesondere 14 Gew.-%.

Bei geringeren Gehalten würde sich die Kristallisationsneigung dementsprechend erhöhen, zu hohe Gehalte würden die Säurebeständigkeit der Gläser verschlechtern.

Der Zusatz von Alkalioxiden führt zu höheren thermischen Ausdehnungskoeffizienten, weshalb nur relativ geringe Mengen, nämlich weniger als 0.1 Na₂O, eingesetzt werden. Anstelle von Na₂O können prinzipiell auch die beiden anderen Alkalioxide Li₂O und K₂O verwendet werden, jedoch ist aus Kostengründen das Na₂O vorzuziehen. K₂O-haltige Schmelzen führen auch oftmals zu erhöhter Wannensteinkorrosion. Außerdem enthalten alle natürlich Vorkommen kaliumhaltiger Rohstoffe das radioaktive Isotop ⁴⁰K, was für einige elektrotechnische Anwendungen nicht gewünscht ist.

Es wird für niedrigdehnende Gläser vorzugsweise ganz auf eine Zugabe von Alkalioxiden verzichtet. Unter alkalifrei ist zu verstehen, dass die Gläser Alkalioxide nur als unvermeidliche Spuren, die durch Rohstoffe oder Tiegelmaterialien eingeschleppt wurden, enthalten. Der Gehalt dieser unvermeidlichen Verunreinigungen liegt bei maximal 0,1 Gew.-%, weiter bevorzugt bei maximal 0,05 oder maximal 0,01 Gew.-% im fertigen Glas.

Zur Absenkung der Viskosität der Schmelze enthalten die Gläser die beiden Erdalkalioxide MgO und CaO als sogenannte Flussmittel. MgO ist dabei wesentlich effektiver in der Absenkung von T4 als CaO Eigentlich wäre es vorteilhaft, wenn das Verhältnis von CaO zu MgO auf Gewichtsprozentbasis zwischen 1,4 und 1,8 liegt (oder, bei Angabe der Konzentrationen in Molprozent, zwischen 1,0 bis 1,6). Bei diesem Verhältnis können die kostengünstigen Rohstoffe Dolomit und Kalk verwendet werden, ohne dass zusätzlich der teure Rohstoff MgCO₃, oder gar noch teurere Mg-Rohstoffe, eingesetzt werden muss. Leider wären mit dem genannten Verhältnis keine niedrigdehnenden Gläser mehr möglich, deren Wert für T4 unterhalb 1320°C liegt.

Vorzugsweise beträgt der Summengehalt an MgO und CaO mindestens 14, weiter vorzugsweise maximal 18 Gew.-%.

Weiter bevorzugt beträgt der Gehalt an MgO und an CaO jeweils 7-10 Gew.-%, vorzugsweise 7-9 Gew.-%.

Auf eine Zugabe der Erdalkalioxide SrO und BaO wird verzichtet, da diese Komponenten toxikologisch nicht ganz unbedenklich sind und es, besonders bei der Anwendung als Pharmaprimärpackmittel, zu wolkigen Ausfällungen mit Lösungen einiger spezieller, meist schwefelhaltiger Wirkstoffe kommen kann. Auch die Dichte der Gläser würde bei Verwendung der schweren Erdalkalioxide steigen-zur Gewichtsreduzierung der (Bauteile/Komponenten) ist aber eine geringe Glasdichte im Interesse der Anwender. Der Einsatz von Bleioxid PbO ist aus toxikologischen Gründen zu vermeiden.

Das Zinkoxid ZnO wirkt hier, ähnlich wie die Erdalkalioxide, als Flussmittel und kann bis zu 10 Gew.-% im Glas enthalten sein. Nachteilig bei der Verwendung dieser Komponente ist die Neigung zur Verdampfung mit anschließender Kondensation der Verdampfungsprodukte, was, besonders bei dem Floatverfahren, zu unerwünschten Glasfehlern auf der Oberfläche der Glasartikel führen kann. Vorzugsweise ist daher Zinkoxid, außer unvermeidbaren Verunreinigungen, nicht im Glas enthalten.

Titanoxid TiO₂ kann die hydrolytische Beständigkeit der Gläser verbessern und bewirkt stets eine verstärkte Absorption der UV-Strahlung. Es führt jedoch auch zu erhöhten Gemengepreisen und ist als Schwermetall als Glaskomponente in einigen Anwendungen nicht erwünscht. Außerdem wird oftmals die Ausbildung einer braunen Farbe beobachtet, was für einige Anwendungen störend ist. Diese Färbung ist um so ausgeprägter, je mehr Eisenoxid, über die Rohstoffe oder den Wiedereinsatz von Scherben, in das Glas einschleppt wird.

Bevorzugt ist das Glas daher, bis auf unvermeidbare Verunreinigungen, frei von Titanoxid, als auch frei von Eisenoxid.

Zirkonoxid verbessert in starkem Maße die Laugenbeständigkeit der Gläser, was jedoch für die meisten Anwendungen nicht von besonders großer Relevanz ist. Es kann bis zu 10 Gew.-% enthalten sein.

Bevorzugt wird jedoch auf den Einsatz von Zirkonoxid verzichtet, da bei dessen Einsatz die Gemengekosten steigen, das Aufschmelzverhalten des Gemenges sich besonders bei alkaliarmen Zusammensetzungen verschlechtert, die Viskosität der Schmelze ansteigt und es als Schwermetall in einigen Anwendungen nicht erwünscht ist. Das Glas enthält also vorzugsweise, bis auf unvermeidbare Verunreinigungen, kein Zirkonoxid.

Das Glas kann herkömmliche Läutermittel in üblichen Mengen von bis zu 2 Gew.-%, vorzugsweise von bis zu 1,5 Gew.-%, weiter bevorzugt von bis zu 1 oder sogar höchstens bis zu 0,5 Gew.-% enthalten.

So können in Summe bis zu 1,5 Gew.-% AS₂O₃, Sb₂O₃, SnO₂, MnO₂, Fe₂O₃, Cl⁻ (z. B. als NaCl oder ZnCl₂), F⁻ (z.B. als CaF₂ oder MgF₂) und/oder Sulfat (z. B. als Na₂SO₄ oder ZnSO₄) enthalten sein, wobei CeO₂ allenfalls bis zur Höchstgrenze von 0,1 Gew.-% enthalten ist. Durch den Zusatz von Fluorid wird die Viskosität der Schmelze erniedrigt, was die Läuterung beschleunigt. Aus Umweltschutzgründen sollte möglichst auf den Zusatz von As₂Os oder Sb₂O₃ verzichtet werden.

Obwohl im Labormaßstab auch ohne den Zusatz eines Läutermittels eine gute Glasqualität erhalten werden kann, könnte sich für eine großtechnische Produktion der Zusatz eines Läutermittels zur Verbesserung der Blasenqualität als notwendig erweisen. Bei den natriumoxidhaltigen Varianten können Teile des Na₂O über das Läutermittel Kochsalz (NaCl) eingeführt werden. Die Säurebeständigkeit könnte sich jedoch durch den Zusatz an Chlorid verschlechtern.. Der Einsatz von Chloriden im Neutralglas könnte aus folgendem Grund problematisch sein: bei der Wiedererwärmung kann es zu Verdampfungen von Chloriden mit anschließender Kondensation auf den Glasartikeln kommen. Dieses Phänomen ist z.B. bei der Ablängung von Rohren vor der Lampe unter dem Begriff "Lampenringe" bekannt. Der Zusatz an Chloriden sollte möglichst gering gehalten werden. Es können auch die bekannten alternativen Läuterverfahren, z.B. Sulfatläuterung oder das Hochtemperatur-Boosting, eingesetzt werden.

Leichtflüchtige Fluoride können, in Analogie zu den Chloriden, bei der Schmelze und bei der Heißverarbeitung Verdampfungs- bzw. Kondensationserscheinungen zeigen. Dies kann u.U. zu einer geringeren Lebensdauer der verwendeten Formgebungsmaterialien führen. Auch können Fluoride durch die Einwirkung wässriger oder anderer Lösungen aus dem Glas in die Flüssigkeit austreten und dort unerwünschte Reaktionen mit den Inhaltsstoffen hervorrufen. Der Fluoridanteil sollte daher möglichst gering gehalten werden und die Obergrenze von 1,5% nicht übersteigen.

### Beispiele und Vergleichsbeispiele

Mehrere Beispiele aus der Familie der LAS-Glaskeramiken wurden sowohl vor als auch nach der Keramisierung hinsichtlich ihrer Säurebeständigkeit gemäß DIN 12116 getestet, erreichten aber in keinem Fall die Säureklasse 1.

Ferner wurden zahlreiche Aluminosilikatgläser geschmolzen und deren Eigenschaften gemessen.

Boroxidfreie Aluminosilikatgläser, die als Ausgangsglas ("Grünglas") für Glaskeramiken verwendet werden, haben in der Regel gute hydrolytische Beständigkeiten, jedoch ist die Säurebeständigkeit ungenügend, siehe beispielsweise Zusammensetzungen V1 (Salama S.N., Salman S.M. and Gharib S., J.Non-Cryst.Solids, 1987, vol. 93, No. 1, p. 203) und V2 (Zdaniewski W., J.Am.Ceram.Soc., 1975, vol. 58, No. 5-6, p. 163). V3 und V4 (Beispiele aus US 5,508,237) sind borfeie Substratgläser für Flachbildschirme, siehe

Tabelle 2.

**Tabelle 2: Vergleichsbeispiele aus dem Stand der Technik (Konzentrationsangaben in Gew.-% auf Oxidbasis).**

| | V1 | V2 | V3 | V4 |
|---|---|---|---|---|
| SiO₂ | 60.68 | 59.83 | 65.90 | 65.70 |
| Al₂O₃ | 28.08 | 17.09 | 13.00 | 8.00 |
| Li₂O | 2.74 | | | |
| MgO | 8.50 | 8.55 | | |
| CaO | | | | 5.70 |
| SrO | | | 0.40 | 12.90 |
| BaO | | | 20.70 | 7.70 |
| TiO₂ | | 5.98 | | |
| CeO₂ | | 8.55 | | |
| α _{20/300} (10⁻⁶/K) | 3.92 | 3.33 | | 5.00 |
| Dichte (g/cm³) | 2.4934 | 2.655 7 | | 2.7337 |
| Tg (°C) | 721 | 762 | | 757 |
| T7,6 (°C) | entglast | entglast | | 989 |
| T4 (°C) | 1228 | 1259 | | 1323 |
| H (µg/g) | 14 | 12 | | 13 |
| S (mg/dm²) | 31 | 116 | | 0.6 |
| L (mg/dm²) | 115 | 142 | | 91 |

Gläser der angegebenen Zusammensetzung (in Gew.-%) wurden durch Schmelzen üblicher Rohstoffe in einem induktiv beheizten Pt/Rh-Tiegel (Pt20Rh) bei 1650 °C erschmolzen. Die Gläser können durch einen geringen Gehalt an diesen Edelmetallen rotbräunlich gefärbt sein, was normalerweise keinen Einfluss auf die hier gemessenen Eigenschaften hat. Zur Vermeidung der Färbung durch Edelmetalle kann ein Innentiegel aus Quarzglas verwendet werden. Die Schmelzdauer betrug drei bis vier Stunden. Anschließend wurde die Schmelze zur Homogenisierung für eine Stunde bei 1600°C gerührt und danach für zwei Stunden bei dieser Temperatur ohne Rühren abstehen gelassen, um eventuell vorhandene Blasen zur Oberfläche aufsteigen zu lassen. Die Schmelze wurde mit einer definierten Kühlrate von 30K/h abgekühlt.

V1 und V2 sind sehr stabil gegen einen Wasserangriff, jedoch weit entfernt vom Ziel der ersten Säureklasse (Gewichtsverlust bis 0,7 mg/dm²). Die Schmelze von V3 war sehr zäh, weshalb kein geeigneter Glasblock gegossen werden konnte. V4 stellt tatsächlich ein boroxidfreies 1-1-2 Glas dar, jedoch ist die Verarbeitungstemperatur T4 mit über 1320°C zu hoch für eine wirtschaftliche Produktion in kommerziellen Schmelzaggregaten. Außerdem sind hohe Anteile an SrO und BaO generell unerwünscht, da die Gefahr von Ausfällungen mit schwefelhaltigen Arzneimittel (Sulfone, Sulfate und dergl.) besteht. Die Komponenten SrO und BaO sollten wegen derartiger Bedenken möglichst gar nicht enthalten sein.

In der oben beschriebenen Weise wurde ferner eine Reihe von Vergleichsbeispielen (V5 bis V10) erschmolzen. In der nachfolgenden Tabelle 3 sind die jeweiligen Zusammensetzungen in Gewichtsprozent auf Oxidbasis, der thermische Ausdehnungskoeffizienten im Bereich von 20 °C bis 300 °C α _{20/300} [10⁻⁶K⁻¹], die Glastransformationstemperatur Tg [°C], die Obere Kühltemperatur T13 [°C], die Erweichungstemperatur T7,6 [°C], die Verarbeitungstemperatur T4 [°C] nach DIN 52312, die hydrolytische Beständigkeit H (Basenäquivalent des Säureverbrauches als µg Na₂O/g Glasgrieß), die Abtragswerte S nach Säureangriff [mg/dm²] und L nach Laugenangriff [mg/dm²] sowie der Elastizitätsmodul E-Mod [GPa] aufgelistet.

Es zeigt sich, dass durch den Einsatz relativ großer Anteile der Komponenten TiO₂ und ZrO₂ hydrolytisch stabile Gläser erzeugt werden können, besonders wenn die Komponente TiO₂ in größeren Anteilen vorhanden ist. Auch können Gläser erhalten werden, die in der Laugenbeständigkeit in der ersten Klasse liegen, besonders wenn die Komponente ZrO₂ in größeren Anteilen vorliegt. Jedoch erreichen die Gläser mit diesen Komponenten, egal ob einzeln oder zusammen, nicht die bevorzugte erste Säureklasse.

**Tabelle 3: Borfreie Aluminosilikatgläser (Vergleichsbeispiele), Konzentrationsangaben in Gew.-% auf Oxidbasis**

| | V5 | V6 | V7* | V8 | V9* | V10* |
|---|---|---|---|---|---|---|
| SiO₂ | 63,2 | 65,0 | 64,0 | 65,0 | 64,0 | 64,0 |
| Al₂O₃ | 20,0 | 17,5 | 17,5 | 17,5 | 17,5 | 17,5 |
| Na₂O | | | 3,0 | | 3,0 | 3,0 |
| MgO | 6,0 | 8,3 | 6,3 | 8,3 | 6,3 | 4,9 |
| CaO | 6,8 | 5,4 | 5,4 | 5,4 | 5,4 | 6,8 |
| TiO₂ | 4,0 | 3,8 | 1,9 | | | 1,9 |
| ZrO₂ | | | 1,9 | 3,8 | 3,8 | 1,9 |
| α _{20/300} (10⁻⁶/K) | 3,56 | 3,62 | 4,28 | 3,48 | 4,25 | 4,4 |
| Dichte (g/cm3) | 2,542 | 2,5346 | 2,5295 | 2,5593 | 2,5436 | 2,5328 |
| Tg (°C) | 761 | 756 | 735 | 791 | 751 | 731 |
| T7,6(°C) | 979 | 973 | 954 | 1003 | 973 | 958 |
| T4 (°C) | 1274 | 1269 | 1280 | 1298 | 1296 | 1284 |
| H (µg/g) | 11 | 11 | 8 | 7 | 12 | 13 |
| S (mg/dm²) | 3,7 | 2,3 | 1,9 | 1,4 | 1,3 | 2 |
| L (mg/dm²) | 97 | 88 | 59 | 51 | 47 | 52 |

| | | | | | | |
|---|---|---|---|---|---|---|
| * Vergleichsbeispiele | | | | | | |

**Tabelle 4: Borfreie Aluminosilikatgläser (Vergleichsbeispiele und erfindungsgemäße Gläser), Konzentrationsangaben in Gew.-% auf Oxidbasis**

| | V11 | V12 | E1 | E2 | E3 * | V13 |
|---|---|---|---|---|---|---|
| SiO₂ | 63,0 | 62,0 | 69,0 | 69,0 | 71,0 | 66,2 |
| Al₂O₃ | 17,2 | 16,2 | 17,0 | 17,0 | 17,0 | 20,8 |
| Na₂O | | | | | 2,0 | |
| MgO | 9,0 | 9,0 | 8,0 | 8,0 | 5,0 | 5,0 |
| CaO | 4,0 | 4,0 | 6,0 | 6,0 | 5,0 | 8,0 |
| ZrO₂ | 6,8 | 8,8 | | | | |
| SnO₂ | | | | | | 0,2 |
| α _{20/300} (10⁻⁶/K) | 3,45 | 3,52 | 3,4 | 3,44 | 3,56 | 3,55 |
| Dichte | 2,6073 | 2,6408 | 2,4801 | 2,4766 | 2,4275 | 2,5066 |
| Tg (°C) | 796 | 793 | 787 | 781 | 767 | 803 |
| T13 (°C) | | | 797 | 796 | 781 | 814 |
| T7,6 (°C) | 1003 | 1021 | 1014 | 1012 | 1024 | 1023 |
| T4 (°C) | 1316 | 1331 | 1337 | 1335 | 1399 | 1337 |
| H (µg/g) | 13 | 12 | 11 | 10 | 9 | 13 |
| S (mg/dm²) | 4,1 | 15,6 | 0,9 | 0,8 | 1,1 | 1,4 |
| L (mg/dm²) | 42 | 36 | 83 | 81 | 74 | 87 |

| | | | | | | |
|---|---|---|---|---|---|---|
| * Vergleichsbeispiel | | | | | | |

Weitere Gläser mit teilweise höheren Gehalten an SiO₂, ohne Zusatz von TiO₂ und teilweise ohne ZrO₂ sind in Tabelle 4 zusammengefasst. Dabei sind erfindungsgemäße Gläser E1 bis E3 enthalten, sowie Vergleichsbeispiele V11 bis V13. Die erfindungsgemäßen Gläser sind frei Zirkonoxid und Titanoxid, außer bei E3 auch frei von Alkalioxiden. Sie weisen eine hydrolytische Beständigkeit in der Klasse 1, eine Säurebeständigkeit in der Klasse 2 und eine Laugenbeständigkeit in der Klasse 2 auf (E3 in Klasse 1). Allerdings liegt die Verarbeitungstemperatur teilweise noch sehr hoch.

**Tabelle 5: Borfreie Aluminosilikatgläser (Vergleichsbeispiele und erfindungsgemäße Gläser), Konzentrationsangaben in Gew.-% auf Oxidbasis**

| | V14 | V15 | E4 | E5 | V16 | V17 |
|---|---|---|---|---|---|---|
| SiO₂ | 70,0 | 72,0 | 69,8 | 69,8 | 69,8 | 69,8 |
| Al₂O₃ | 13,0 | 11,0 | 12,6 | 12,8 | 12,8 | 12,8 |
| Na₂O | | | | | | |
| MgO | 12,0 | 12,0 | 9,0 | 9,0 | 6,0 | 8,0 |
| CaO | 4,0 | 4,0 | 6,5 | 8,2 | 5,2 | 8,2 |
| TiO₂ | 0,8 | 0,8 | 1,9 | | | |
| ZnO | | | | | 6,0 | 4,0 |
| SnO₂ | 0,2 | 0,2 | 0,2 | 0,2 | 0,2 | 0,2 |
| α_{20/300} (10⁻⁶/K) | | | 3,65 | 3,82 | 3,24 | 3,41 |
| Dichte (g/cm³) | | | 2,4987 | 2,5003 | 2,5388 | 2,5299 |
| Tg (°C) | | | 768 | 755 | 752 | 753 |
| T7,6(°C) | | | 977 | 977 | 990 | 982 |
| T4 (°C) | | | 1298 | 1289 | 1332 | 1312 |
| H(µg/g) | | | 14 | 17 | 9 | 11 |
| S (mg/dm²) | | | 1,4 | 0,5 | 1,9 | 2,0 |
| L (mg/dm²) | | | 74 | 82 | 93 | 96 |
| E-Mod (GPa) | | | 88 | 88 | 87 | 88 |

Schließlich sind in Tabelle 5 weitere Gläser mit Vergleichsbeispielen V14 bis V17 und erfindungsgemäßen Gläsern E4 und E5 enthalten. Bei den erfindungsgemäßen Gläsern liegt die Verarbeitungstemperatur T4 unterhalb von 1300 °C.

Während das Glas E4 noch in der Säureklasse 2 liegt, handelt es sich beim Glas E5 um ein besonderes bevorzugtes Glas, das eine ausgezeichnete chemische Beständigkeit aufweist in der Klasse 1-1-1. Es ist weiterhin alkalifrei. Gleichfalls ist die thermische Ausdehnung mit 3,82. 10-6/K unterhalb von 4. 10⁻⁶/K. Weiter ist kein Titanoxid, Zirkonoxid oder Zinkoxid enthalten. Schließlich werden keine teuren oder umweltschädlichen Rohstoffe verwendet.

Glas E5 erfüllt alle genannten Anforderungen an ein niedrigdehnendes Universalglas. Die Schlieren- und Blasenqualität war sehr gut.

Die Gläser V14 und V15 zeigten nach dem Guss eine starke Trübung, weshalb keine weiteren Messungen daran durchgeführt wurden. Ursache der Trübung ist eine Phasentrennung beim Abkühlen der Schmelze aufgrund eines zu hohen MgO-Anteils von 12%.

Zur Beurteilung der Entglasungsstabilität wurden Glasproben von E5 bei 1500°C für 30 Minuten eingeschmolzen und in einem Gradientenofen fünf Stunden lang getempert. Im Temperaturbereich von 1150 bis 1423°C konnte keine definierte Entglasung beobachtet werden. Die Entglasungsstabilität dieses borfreien Unversalglases, das auch die Eigenschaften eines Neutralglases erfüllt, ist also als sehr gut zu bezeichnen.

Durch den Verzicht auf die teuren Rohstoffe Borax, Borsäure und Magnesiumcarbonat liegen die Gemengekosten des bevorzugten Glases E5 deutlich unter den Gemengekosten der bekannten Universalgläser.

## Patentansprüche

1. Universalglas, das wenigstens die folgenden Bestandteile enthält (in Gew.-% auf Oxidbasis):
| | |
|---|---|
| SiO₂ | 65 - 75, |
| Al₂O₃ | 11 - 18, |
| MgO | 5 - 10, |
| CaO | 5 - 10, |
wobei, bis auf unvermeidbare Verunreinigungen, kein B₂O₃, SrO, BaO, CeO₂, PbO und höchstens 0,1 Gew.-% Alkalioxide enthalten sind, eine hydrolytische Beständigkeit nach DIN ISO 719 in der 1. hydrolytischen Klasse, eine Säurebeständigkeit nach DIN 12116 mindestens in der 2. Säureklasse und eine Laugenbeständigkeit nach DIN ISO 695 in mindestens der 2. Laugenklasse vorliegt.

2. Universalglas nach Anspruch 1, das bis auf unvermeidbare Verunreinigungen, frei von ZnO ist.

3. Universalglas nach Anspruch 1 oder 2, das bis auf unvermeidbare Verunreinigungen frei von TiO₂ ist.

4. Universalglas nach einem der vorhergehenden Ansprüche, das bis auf unvermeidbare Verunreinigungen frei von Fe2O₃ ist.

5. Universalglas nach einem der vorhergehenden Ansprüche, bei dem der Gehalt an SiO₂ mindestens 68 Gew.-% beträgt, vorzugsweise maximal 71 Gew.-%.

6. Universalglas nach einem der vorhergehenden Ansprüche, bei dem der Gehalt an Al₂O₃ mindestens 11 Gew.-%, weiter bevorzugt mehr als 12 Gew.-%, besonders bevorzugt mindestens 12,5 Gew.-% beträgt, und bei dem der Gehalt an Al₂O₃ vorzugsweise maximal 17,5 Gew.-%, bevorzugt maximal 17 Gew.-%, insbesondere maximal 14 Gew.-% beträgt.

7. Universalglas nach einem der vorhergehenden Ansprüche, bei dem der Summengehalt an MgO und CaO mindestens 14 Gew.-% und vorzugsweise maximal 18 Gew.-% beträgt.

8. Universalglas nach einem der vorhergehenden Ansprüche, bei dem der Gehalt an MgO 7-10 Gew.-%, vorzugsweise 7-9 Gew.-% beträgt.

9. Universalglas nach einem der vorhergehenden Ansprüche, bei dem der Gehalt an CaO 7- 10 Gew.-%, vorzugsweise 7-9 Gew.-% beträgt.

10. Universalglas nach einem der vorhergehenden Ansprüche, das 0-10 Gew.-% ZrO₂ enthält, und das vorzugsweise, bis auf unvermeidbare Verunreinigungen, frei von ZrO₂ ist.

11. Universalglas nach einem der vorhergehenden Ansprüche, das Läutermittel in üblichen Mengen von bis zu 2 Gew.-%, vorzugsweise von bis zu 1,5 Gew.-%, weiter bevorzugt von bis zu 1 Gew.-%, besonders bevorzugt von bis zu 0,5 Gew.-% enthält, wobei das Läutermittel vorzugsweise aus der Gruppe ausgewählt ist, die aus As₂O₃, Sb₂O₃, SnO₂, Cl⁻, F⁻, SO₄²⁻ besteht.

12. Universalglas nach einem der vorhergehenden Ansprüche, das eine Verarbeitungstemperatur T4 (bei einer Viskosität der Glasschmelze von 10⁴ dPas) von höchstens 1400 °C, vorzugsweise von höchstens 1350 °C, weiter bevorzugt von kleiner 1320 °C, insbesondere von kleiner 1300°C aufweist.

13. Universalglas nach einem der vorhergehenden Ansprüche, das eine thermische Dehnung von höchstens 4.10⁻⁶K⁻¹ aufweist.

14. Verwendung eines Universalglases nach einem der vorhergehenden Ansprüche als:
- Pharmaprimärpackmittel, insbesondere als Flasche, Spritze oder Ampulle,
- Geräteglas für Laboranwendungen und für den Chemieanlagenbau,
- Substrat, Superstrat oder Abdeckung, insbesondere für elektrotechnische Anwendungen, für TFT-, PDP-, OLED-Bildschirme, für die Photovoltaik,
- Rohr, insbesondere für Lampen, Halogenlampen oder Leuchtstoffröhren oder für solarthermische Anwendungen,
- Reflektor, insbesondere für Lampen,
- Architekturglas,
- Teil eines Backofens, Kühlschranks oder Herds.

## Claims

1. A universal glass comprising at least the following constituents (in % by weight on an oxide basis):
| | |
|---|---|
| SiO₂ | 65-75, |
| Al₂O₃ | 11-18, |
| MgO | 5-10, |
| CaO | 5-10, |
where, except for unavoidable impurities, no B₂O₃, SrO, BaO, CeO₂, PbO and at most 0.1 weight per cent of alkali oxides are present and the hydrolytic resistance in accordance with DIN ISO 719 is in the 1st hydrolytic class, the acid resistance in accordance with DIN 12116 is at least in the 2nd acid class and the alkali resistance in accordance with DIN ISO 695 is in at least the 2nd alkali class.

2. The universal glass as claimed in claim 1 which is free of ZnO except for unavoidable impurities.

3. The universal glass as claimed in claim 1 or 2 which is free of TiO₂ except for unavoidable impurities.

4. The universal glass as claimed in any of the preceding claims which is free of Fe₂O₃ except for unavoidable impurities.

5. The universal glass as claimed in any of the preceding claims, wherein the content of SiO₂ is at least 68% by weight, preferably not more than 71% by weight.

6. The universal glass as claimed in any of the preceding claims, wherein the content of Al₂O₃ is at least 11% by weight, more preferably greater than 12% by weight, particularly preferably at least 12.5% by weight, and wherein preferably the content of AshO₃ is not more than 17.5% by weight, preferably not more than 17% by weight, in particular not more than 14% by weight.

7. The universal glass as claimed in any of the preceding claims, wherein the total content of MgO and CaO is at least 14% by weight, preferably not more than 18% by weight.

8. The universal glass as claimed in any of the preceding claims, wherein the content ofMgO is 7-10% by weight, preferably 7-9% by weight.

9. The universal glass as claimed in any of the preceding claims, wherein the content of CaO is 7-10% by weight, preferably 7-9% by weight.

10. The universal glass as claimed in any of the preceding claims which contains 0-10% by weight of ZrO₂ and is preferably free of ZrO₂ except for unavoidable impurities.

11. The universal glass as claimed in any of the preceding claims which contains refining agents in customary amounts of up to 2% by weight, preferably up to 1.5% by weight, more preferably up to 1% by weight, particularly preferably up to 0.5% by weight, wherein the refining agent is preferably selected from the group consisting of As₂O₃, Sb₂O₃, SnO₂, Cl⁻, F⁻, SO₄²⁻.

12. The universal glass as claimed in any of the preceding claims which has a processing temperature T4 (at a viscosity of the glass melt of 10⁴ dPas) of not more than 1400°C, preferably not more than 1350°C, more preferably less than 1320°C, in particular less than 1300°C.

13. The universal glass as claimed in any of the preceding claims which has a thermal expansion of not more than 4. 10⁻⁶ K⁻¹.

14. A use of a universal glass as claimed in any of the preceding claims as:
- primary pharmaceutical packaging, in particular as bottle, syringe or ampoule,
- apparatus glass for laboratory applications and for chemical plant construction,
- substrate, superstrate or covering, in particular for electrical applications, for TFT, PDP, OLED display screens, for photovoltaics,
- tube, in particular for lamps, halogen lamps or fluorescent tubes or for solar-thermal applications,
- reflector, in particular for lamps,
- architectural glass,
- part of a baking oven, refrigerator or cookstove.

## Revendications

1. Verre universel, qui contient au moins les constituants suivants (en % en poids à base d'oxyde) :
| | |
|---|---|
| SiO₂ | 65 à 75, |
| Al₂O₃ | 11 à 18, |
| MgO | 5 à 10, |
| CaO | 5 à 10, |
à l'exception des impuretés inévitables, aucun B₂O₃, SrO, BaO, CeO₂, PbO n'étant contenu et au plus 0,1 % en poids d'oxydes alcalins étant contenus, une résistance hydrolytique selon DIN ISO 719 dans la classe hydrolytique 1, une résistance aux acides selon DIN 12116 au moins dans la classe d'acides 2 et une résistance aux bases selon DIN ISO 695 au moins dans la classe de bases 2 étant présentes.

2. Verre universel selon la revendication 1, qui est exempt de ZnO, à l'exception des impuretés inévitables.

3. Verre universel selon la revendication 1 ou 2, qui est exempt de TiO₂, à l'exception des impuretés inévitables.

4. Verre universel selon l'une quelconque des revendications précédentes, qui est exempt de Fe₂O₃, à l'exception des impuretés inévitables.

5. Verre universel selon l'une quelconque des revendications précédentes, dans lequel la teneur en SiO₂ est d'au moins 68 % en poids, de préférence d'au plus 71 % en poids.

6. Verre universel selon l'une quelconque des revendications précédentes, dans lequel la teneur en Al₂O₃ est d'au moins 11 % en poids, de manière davantage préférée de plus de 12 % en poids, de manière particulièrement préférée d'au moins 12,5 % en poids, et dans lequel la teneur en Al₂O₃ est de préférence d'au plus 17,5 % en poids, de préférence d'au plus 17 % en poids, notamment d'au plus 14 % en poids.

7. Verre universel selon l'une quelconque des revendications précédentes, dans lequel la teneur totale en MgO et CaO est d'au moins 14 % en poids et de préférence d'au plus 18 % en poids.

8. Verre universel selon l'une quelconque des revendications précédentes, dans lequel la teneur en MgO est de 7 à 10 % en poids, de préférence de 7 à 9 % en poids.

9. Verre universel selon l'une quelconque des revendications précédentes, dans lequel la teneur en CaO est de 7 à 10 % en poids, de préférence de 7 à 9 % en poids.

10. Verre universel selon l'une quelconque des revendications précédentes, qui contient 0 à 10 % en poids de ZrO₂ et qui est de préférence exempt de ZrO₂, à l'exception des impuretés inévitables.

11. Verre universel selon l'une quelconque des revendications précédentes, qui contient un agent d'affinage en des quantités usuelles de jusqu'à 2 % en poids, de préférence de jusqu'à 1,5 % en poids, de manière davantage préférée de jusqu'à 1 % en poids, de manière particulièrement préférée de jusqu'à 0,5 % en poids, l'agent d'affinage étant de préférence choisi dans le groupe constitué par AS₂O₃, Sb₂O₃, SnO₂, Cl⁻, F⁻, SO₄²⁻.

12. Verre universel selon l'une quelconque des revendications précédentes, qui présente une température d'usinage T4 (à une viscosité de la masse fondue de verre de 10⁴ dPas) d'au plus 1400°C, de préférence d'au plus 1 350 °C, de manière davantage préférée de moins de 1 320°C, notamment de moins de 1300°C.

13. Verre universel selon l'une quelconque des revendications précédentes, qui présente une expansion thermique d'au plus 4-10⁻⁶ K⁻¹.

14. Utilisation d'un verre universel selon l'une quelconque des revendications précédentes en tant que :
- emballage pharmaceutique primaire, notamment en tant que bouteille, seringue ou ampoule,
- verre pour appareils pour applications de laboratoire et pour la construction d'unités chimiques,
- substrat, superstrat ou couverture, notamment pour applications électrotechniques, pour écrans TFT, PDP, OLED, pour la photovoltaïque,
- tube, notamment pour lampes, lampes halogènes ou tubes fluorescents ou pour des applications solaires thermiques,
- réflecteur, notamment pour lampes,
- verre architectural,
- partie d'un four, réfrigérateur ou poêle.
